# EUROPÄISCHE PATENTSCHRIFT

(11) **EP 2 552 578 B1**
(45) Veröffentlichungstag und Bekanntmachung des Hinweises auf die Patenterteilung: **05.11.2014**
(21) Anmeldenummer: 11716814.6
(22) Anmeldetag: 28.03.2011
(51) Int. Cl.: B01J 2/14

(54) **PELLETIEREINRICHTUNG UND VERFAHREN**
INSTALLATION AND PROCESS OF GRANULATION
INSTALLATION ET PROCEDE DE GRANULATION

(30) Priorität: 29.03.2010 DE 102010013096
(43) Veröffentlichungstag der Anmeldung: 06.02.2013
(73) Patentinhaber: Haver Engineering GmbH, 01662 Meißen (DE)
(72) Erfinder: LAMPKE, Jan, 36469 Tiefenort (DE); SILGE, Steffen, 48155 Münster (DE); SCHURIG, Gunther, 04758 Oschatz (DE); DELATOUR, Vincent, 33334 Gütersloh (DE); WEYRAUCH, Sandra, 09599 Freiberg (DE)
(74) Vertreter: BSB Intellectual Property Law
(86) Internationale Anmeldenummer: PCT/EP2011/001538
(87) Internationale Veröffentlichungsnummer: WO 2011/124336

(56) Entgegenhaltungen:
- DE-B- 1 276 003
- JP-A- 7 068 148

## Beschreibung

Die vorliegende Erfindung betrifft eine Pelletiereinrichtung zum Pelletieren pelletierbarer Stoffe, um z. B. durch das Agglomerieren die Handhabung, Lagerung und die Verarbeitung zu erleichtern oder zu ermöglichen. Beispielsweise kann die Rieselfähigkeit verbessert und die Staubentstehung reduziert werden.

Obwohl im Folgenden die Erfindung im Wesentlichen mit Bezug auf die Herstellung von Pellets aus Eisenerz für die Stahlproduktion beschrieben wird, kann die erfindungsgemäße Pelletiereinrichtung auch zur Agglomeration bzw. zur Pelletierung anderer pelletierfähiger Stoffe verwendet werden. Beispielsweise können neben Primärstoffen auch Sekundärstoffe wie Düngemittel, Filterstäube oder andere Gemische oder Reststoffe zur besseren Handhabung und/oder zur Vermeidung von Entmischung pelletiert werden, um ein einfach zu verarbeitendes Produkt zu erhalten.

Im Stand der Technik sind Pelletiereinrichtungen bekannt geworden, die zuverlässig z. B. pulverförmige oder fein verteilte pelletierfähige Stoffe zu Pellets verarbeiten. Beispielsweise ist mit der DE 29 17 279 ein Pelletierer mit einem kreisrunden und einen Umfangsrand aufweisenden Teller bekannt geworden, der um eine geneigte Achse drehbar ist. Auf dem Teller werden das vorgemischte Pelletiergut und gegebenenfalls ein Bindemittel zugeführt. Abstreifer über dem Teller bewirken eine gleichbleibende Höhe der Bodenschicht des zu pelletierenden Schüttguts. Bei der Drehbewegung des Tellers agglomeriert der pelletierbare Stoff. Die abgeworfenen Pellets werden klassiert. Noch nicht genügend agglomerierte Pellets werden dem Prozess wieder zugeführt.

Der in der DE 29 17 279 offenbarte Stand der Technik funktioniert zuverlässig. Durch Variation der Drehgeschwindigkeit des Tellers und durch eine Anpassung der Bindemittelzufuhr ist eine Änderung der Betriebsparameter möglich, sodass der Pelletierer im gewissen Rahmen auf unterschiedliche Betriebsbedingungen eingestellt werden kann.

Nachteilig an dem bekannt gewordenen Stand der Technik ist aber, dass die Betriebsbedingungen nur mit wenigen variablen Parametern und in relativ engen Grenzen eingestellt werden können.

Durch jahreszeitliche Unterschiede der Umgebungsfeuchtigkeit und Unterschiede in der Lagerung des zu pelletierenden Materials ergeben sich bei gleichen Betriebsbedingungen unterschiedliche Größen der fertigen Pellets.

Mit der JP 07068148 A ist ein weiterer Pelletierteller veröffentlicht geworden. Eine Pelletieranlage gemäß der JP 07068148 A ist der Anmelderin im Markt nicht bekannt. In der JP 07068148 A wird beschrieben, dass in periodischen Abständen die Größenverteilung der pelletierten Pellets gemessen wird. Die fertigen Pellets sollen innerhalb des gewünschten Durchmesserbereiches zwischen 5 und 15 mm gefertigt werden. Um die Durchmesserverteilung der Pellets im gewünschten Bereich zu halten, werden gegebenenfalls die Drehgeschwindigkeit, der Neigungswinkel des Pelletiertellers und die Größe des Prozessraumes über eine Veränderung der Höhe der Seitenwand neu eingestellt.

Verschiedenste Versuche der Anmelderin zur Konstruktion eines Pelletiertellers, bei dem die Seitenwand teleskopierbar ausfahrbar ist, um die Größe des Prozessraumes bei Bedarf zu verändern, haben jedoch nicht zu brauchbaren Ergebnissen geführt. Die zu pelletierenden Partikel, die staubförmig aufgegeben werden, haben sich regelmäßig zwischen die gegeneinander verfahrbaren Seitenwände gesetzt und eine Höhenverstellbarkeit behindert oder sogar blockiert.

Eine Lösung mit einer verstellbaren Seitenwand, die von einem Faltenbalg abgedeckt wird, ist auch angedacht worden. Es erscheint aber unwahrscheinlich, dass ein Faltenbalg den auftretenden Belastungen in einem jahrelang durchgehenden Betrieb Stand hält.

Grundsätzlich ist es aber wünschenswert, eine Pelletieranlage zur Verfügung zu haben, bei der die Größe des Prozessraumes zuverlässig veränderbar ist.

Es ist deshalb die Aufgabe der vorliegenden Erfindung, eine Pelletiereinrichtung zur Verfügung zu stellen, bei der die Größe des Prozessraumes variabel und dauerhaft zuverlässig auf unterschiedliche Betriebsbedingungen einstellbar ist.

Diese Aufgabe wird gelöst durch eine Pelletiereinrichtung mit den Merkmalen des Anspruchs 1. Das erfindungsgemäße Verfahren ist Gegenstand des Anspruchs 15. Bevorzugte Weiterbildungen der Erfindung werden in den Unteransprüchen definiert. Weitere Vorteile und Ausgestaltungen der Erfindung ergeben sich aus den Ausführungsbeispielen.

Eine erfindungsgemäße Pelletiereinrichtung zum Pelletieren pelletierbarer Stoffe umfasst wenigstens einen gegenüber der Horizontalen geneigten und drehbar vorgesehenen Pelletierteller. Der Pelletierteller ist über eine Motoreinrichtung antreibbar. Der Pelletierteller verfügt über wenigstens einen Boden und über wenigstens eine Seitenwand. Der Boden und die Seitenwand spannen dabei einen Prozessraum auf. In dem Prozessraum erfolgt der Pelletierprozess. Die Größe des Prozessraumes ist veränderbar, indem eine effektive Höhe der Seitenwand veränderbar ist. Die Seitenwand umfasst eine innere Seitenwandeinrichtung und eine äußere Seitenwandeinrichtung, wobei die innere Seitenwandeinrichtung gegenüber der äußeren Seitenwandeinrichtung höhenverstellbar angeordnet ist.

Eine erfindungsgemäße Pelletiereinrichtung hat viele Vorteile. Es hat sich überraschenderweise herausgestellt, dass eine innenliegende verfahrbare Seitenwandeinrichtung zu dem gewünschten Ergebnis führt. Bei einer außenliegenden verstellbaren Seitenwandeinrichtung tritt hingegen unzulässig oft eine Blockade der Verstellbarkeit ein. Sehr erstaunlich ist es nun, dass es mit einer innenliegenden verstellbaren Seitenwandeinrichtung funktioniert. Denn die innenliegende verstellbare Seitenwandeinrichtung wird ja ständig dem zu pelletierenden Material ausgesetzt.

Eine außen liegende verstellbare Seitenwand, wie sie auch aus der JP 07068148 A bekannt ist, neigt auch zu einer Blockade durch dazwischen eingeschlossenes Material und Undichtigkeiten. Eine zuverlässige Betriebsweise über Jahre und Jahrzehnte erscheint nicht möglich. Die erfindungsgemäß innenliegende verstellbare Seitenwandeinrichtung funktioniert hingegen zuverlässig auch bei größten Belastungen.

Ein erheblicher Vorteil der erfindungsgemäßen Pelletiereinrichtung liegt nun darin, dass die Größe des Prozessraumes zuverlässig und über lange Zeiträume hinweg insbesondere auch während des laufenden Betriebes veränderbar ist. Der in der Regel nach oben offene Prozessraum wird insgesamt durch den Boden und die Seitenwand definiert. Durch die veränderbare Größe des Prozessraumes kann die Verweilzeit in einem erheblichen Maße effektiv beeinflusst werden. Die Leistungsfähigkeit und der Anteil der Wertkornfraktion können gesteigert werden.

Da das Aufgabegut eine zeitlich und und/oder je nach Ursprungsort schwankende Qualität aufweist und da Unterschiede in der Lagerung sowie der im zu verarbeitenden Material enthaltenen Feuchte vorliegen, können bei konstanten Bedingungen Pellets unterschiedlicher Größe, Festigkeit und auch Dichte entstehen, was unerwünscht ist. Die Erfindung ermöglicht eine automatische und kontinuierliche Anpassung verschiedenster Parameter und insbesondere auch der effektiven Höhe der Seitenwand, wodurch die gewünschten Ergebnisse zielsicher eingehalten werden können.

Möglich ist es zusätzlich auch, den Durchmesser des Prozessraumes zu verändern, um die Größe des Prozessraumes zu vergrößern. In der Regel führt ein im Durchmesser größerer Prozessraum bei sonst gleichen Bedingungen zu einem größeren Durchsatz, während ein kleinerer Prozessraum zu einem geringeren Durchsatz führt. Somit kann über den Durchmesser des Prozessraumes der Durchsatz der hergestellten Pellets beeinflusst werden.

Durch die Vergrößerung der Prozessraumhöhe wird eine längere Verweilzeit und damit werden im Durchschnitt größere Pellets abgegeben, während mit einer Verkleinerung der Prozessraumhöhe eine kürzere Verweilzeit und damit im Durchschnitt kleinere Pellets ausgetragen werden.

Vorteilhaft ist auch, dass über die Verweilzeit und gegebenenfalls andere Parameter auch die Dichte und Porosität der erzeugten Pellets beeinflusst werden kann.

Ein erheblicher Vorteil der erfindungsgemäßen Pelletiereinrichtung liegt darin, dass die effektive Höhe der Seitenwand in Abhängigkeit von dem zu pelletierenden Stoff oder auch von dessen aktuellen Eigenschaften und/oder von den Eigenschaften der produzierten Pellets schnell veränderbar und insbesondere einstellbar ist. Dadurch kann flexibel und schnell auf die jeweils aktuellen Anforderungen reagiert werden. Die Leistungsfähigkeit der erfindungsgemäßen Pelletiereinrichtung kann dadurch erheblich gesteigert und Ausschuss wesentlich verringert werden. Insbesondere wird der Prozessraum durch die effektive Höhe der Seitenwand und durch den Boden begrenzt. Der nach oben in der Regel offene Prozessraum kann durch eine Vergrößerung der effektiven Höhe der Seitenwand entsprechend vergrößert werden. Eine solche Vergrößerung ist möglich, indem die Seitenwand hochgefahren wird oder z. B. indem der Boden oder zumindest Teile davon nach unten verfahren wird.

Beim Pelletiervorgang wird das zu pelletierende Schüttgut auf den Pelletierteller aufgegeben und läuft in der Regel mit dem Pelletierteller mehrfach um, bevor das fertige Pellet den Pelletierteller über die Seitenwand wieder verlässt.

Unter Agglomeration wird hier das Überführen eines Feingutes bzw. feinkörniger Güter in stückige Produkte mit verbesserten Transport- und/oder Verarbeitungs- und/oder Gebrauchseigenschaften verstanden. Ausschlaggebend für die Agglomeration sind anziehende Kräfte zwischen den Partikeln. Anziehende Kräfte können z. B. in Form von Kapillarkräften durch Flüssigkeitsbrücken, Festkörperbrücken und Van-der-Waals-Kräfte zwischen den Partikeln wirken.

Der Prozessraum des Pelletiertellers kann durch einen geneigten und rotierenden flachzylindrischen Behälter gebildet werden. Das aufgegebene Feingut wird durch die Behälterrotation in Abhängigkeit von den Betriebsbedingungen, wie z. B. der Drehzahl und dem Anstellwinkel bis z. B. zur tellerhöchsten Stelle mitgerissen und rollt dann auf einem Materialbett ab. Zur Erzeugung besserer oder geeigneter Haftbedingungen kann das Material z. B. von oben mit Bindemittel besprüht werden.

Bei der Pelletierung befinden sich die kleinsten Partikel dabei zunächst in der Regel in der Nähe des Bodens des Pelletiertellers. Durch die Ausbildung von z. B. Flüssigkeitsbrücken entstehen Pelletkeime, die auf dem Feingut im Materialbett nach oben wandern. Dieser Pelletwachstumsprozess kann mit einem kontinuierlichen Zerfall der Pellets überlagert werden. Durch die überwiegenden Haftkräfte lagern sich weitere Partikel und Pelletbruchstücke an, bis die Agglomerate so groß sind, dass sie durch die einwirkende Schwerkraft über die Seitenwand bzw. den Tellerrand ausgetragen werden. Durch diesen Segregationseffekt ist es möglich, dass die im Pelletierteller hergestellten Pellets eine sehr enge Korngrößenverteilung aufweisen.

Zur Vermeidung von Materialanhaftungen im Prozessraum können Abstreifer verwendet werden. Diese wahlweise stationären oder dynamischen Systeme können eine zusätzliche Vertikalkomponente der Materialdurchmischung ergeben.

Aber auch bei gezielter Beeinflussung der Drehgeschwindigkeit, des Neigungswinkels und der Zugabe von Bindemitteln, Wasser oder dergleichen weist ein gewisser Anteil der abgegebenen Pellets einen Durchmesserbereich auf, der nicht in dem gewünschten Durchmesserbereich liegt. Zu kleine und zu große Pellets können aufbereitet und dem Prozess wieder zugeführt werden.

Mit der erfindungsgemäßen Pelletiereinrichtung, bei der die effektive Seitenwandhöhe über eine Verstellung der inneren Seitenwandeinrichtung einstellbar ist, kann der Anteil der Pellets im gewünschten Wertkornbereich deutlich erhöht werden. Dadurch steigt die Effektivität der Pelletiereinrichtung, sodass die Ausbeute erheblich höher ist. Bei gleichbleibenden Abmessungen und gleichbleibenden Betriebsbedingungen wird die produzierte Menge der Wertkornfraktion erheblich erhöht.

Die Seitenwand des Pelletiertellers kann als ein einfaches oder auch als ein komplexes System aufgebaut sein. Die Seitenwand kann dabei eine innere Seitenwandeinrichtung und eine äußere Seitenwandeinrichtung umfassen. Möglich ist auch ein teleskopierbarer Aufbau der Seitenwand aus zwei oder mehr Seitenwandkomponenten.

Insbesondere ist es möglich, dass der Boden und die Seitenwandeinrichtung gegenüber einander beweglich und insbesondere verfahrbar vorgesehen sind. Dabei kann der Boden oder wenigstens ein Teil des Bodens gegenüber einer feststehenden Seitenwandeinrichtung beweglich und insbesondere verfahrbar vorgesehen sein. Bevorzugt ist es auch, dass sowohl der Boden als auch die innere Seitenwandeinrichtung jeweils wenigstens teilweise beweglich vorgesehen sind.

Möglich ist es auch, nur einen Teil des Bodens höhenverstellbar vorzusehen, beispielsweise einen zentralen inneren oder einen äußeren oder einen anderen Bereich.

In bevorzugten Ausgestaltungen ist wenigstens eine Verstelleinrichtung zur Verstellung der effektiven Höhe der Seitenwand vorgesehen. Bevorzugt ist insbesondere eine Hydraulikeinrichtung zur Höhenverstellung der Seitenwand. Möglich und bevorzugt ist insbesondere auch ein Verstellmotor, der beispielsweise über einen Spindelantrieb oder eine Zahnstange oder dergleichen eine Höhenverstellung der Seitenwand bewirkt. Bei großen Pelletiereinrichtungen mit einem hohen Massendurchsatz bieten hydraulische Verstelleinrichtungen Vorteile, da sie große Kräfte übertragen können. Spindelantriebe sind hingegen flexibel einsetzbar und bei Bedarf können auch mehrere Spindelantriebe über den Umfang eines Pelletiertellers verteilt angeordnet werden.

In einer bevorzugten Weiterbildung ist die innere Seitenwandeinrichtung über mehrere Schubstangen höhenverstellbar vorgesehen. Beispielsweise kann zentral oder an mehreren Stellen verteilt die Verstelleinrichtung über die Schubstangen auf die Seitenwandeinrichtung einwirken. Möglich ist auch, dass ein oder mehrere Schubstangen mit einer Spindel oder dergleichen versehen sind, auf die entsprechende Verstellmotoren koordiniert einwirken. Vorzugsweise sind die Schubstangen über Lager und insbesondere Linearlager geführt, um die Reibung zu verringern.

In bevorzugten Ausgestaltungen der Erfindung ist der Neigungswinkel des Pelletiertellers veränderbar und insbesondere einstellbar. Dabei kann der Neigungswinkel des Pelletiertellers vorzugsweise wenigstens im Stillstand verändert werden. Möglich ist es aber auch, dass der Neigungswinkel des Pelletiertellers während des Betriebes veränderbar und insbesondere sogar auch automatisch veränderbar ist.

Vorzugsweise ist wenigstens eine Antriebseinrichtung zur Einstellung des Neigungswinkels des Pelletiertellers vorgesehen.

Besonders bevorzugt ist es, dass die effektive Höhe der Seitenwand des Pelletiertellers wenigstens im Stillstand und insbesondere während des Betriebes vorzugsweise automatisch veränderbar ist. Dadurch kann während des Betriebes schnell die effektive Höhe der Seitenwand des Pelletiertellers an die aktuellen Bedingungen und/oder Erfordernisse angepasst werden.

Es ist bevorzugt, dass wenigstens eine Sensoreinrichtung zur Erfassung der aktuellen Höhe der Seitenwand vorgesehen ist. Möglich ist es auch, dass der Verstellantrieb der Seitenwand seine Position selbstständig über Absolutdrehwinkelgeber oder dergleichen erfasst.

In besonders bevorzugten Ausgestaltungen ist wenigstens eine Sensoreinrichtung zur Erfassung der Größe und/oder der Form der fertigen ausgetragenen Pellets vorgesehen. Beispielsweise kann anstatt der Größe der pelletierten Pellets aber auch der Massenanteil und/oder der Volumenanteil der abgegebenen Pellets bestimmt werden, der im gewünschten Durchmesserbereich liegt. Oder es wird der Massenanteil der Pellets bestimmt, die einen zu großen und/oder zu kleinen Durchmesser aufweisen. Möglich ist aber auch eine Erfassung der Durchmesser der hergestellten Pellets über z. B. optische Messverfahren.

Vorzugsweise wird wenigstens ein Parameter des zu pelletierenden Stoffes erfasst. Beispielsweise kann der Feuchtigkeitsanteil in dem zu pelletierenden Stoff gemessen werden. Möglich sind aber auch unterschiedlichste Messungen chemikalischer oder physikalischer Eigenschaften des zu pelletierenden Stoffes. Insbesondere ist es auch möglich, die Größenverteilung des aufzugebenden und zu pelletierenden Stoffes zu erfassen.

Durch die Messung eines oder mehrerer Parameter des zu pelletierenden Stoffes und durch die Verknüpfung dieser Parameter mit den aktuellen Betriebsparametern und der Größenverteilung der hergestellten Pellets kann das Betriebsverhalten mittels einer Steuereinrichtung verbessert und sogar optimiert werden.

Insbesondere ist es möglich, durch Messungen wenigstens eines Parameters des zu pelletierenden Stoffes und durch Erfassung der Größe oder wenigstens eines anderen Parameters der fertigen Pellets die effektive Höhe der Seitenwand und/oder die Drehzahl des Pelletiertellers und/oder den Neigungswinkel des Pelletiertellers entsprechend anzupassen, um einen möglichst hohen effektiven Durchsatz zu erzielen. Die maximale Drehzahl des Pelletiertellers ist in der Regel begrenzt, um beim Pelletieren ein Abrollen der sich bildenden Pellets zu gewährleisten.

Insbesondere ist auch eine Variation der Zugabe von Zusatzstoffen und/oder von Wasser oder anderen Flüssigkeiten oder Feststoffen möglich. Beispielsweise kann die Menge des zugeführten Bindemittels eingestellt werden. Eine Zugabe ist vor der Aufgabe der des zu pelletierenden Materials auf den Pelletierteller und/oder auf dem Pelletierteller möglich und bevorzugt.

In bevorzugten Ausgestaltungen ist wenigstens ein Abstreifer auf dem Pelletierteller vorgesehen. Ein solches Abstreifen dient dazu, die Schichthöhe auf dem Boden zu regulieren und/oder insgesamt das Materialbett zu führen.

Vorzugsweise sind die äußere Seitenwandeinrichtung und die innere Seitenwandeinrichtung voneinander wenigstens abschnittsweise beabstandet angeordnet. Der dazwischen wenigstens abschnittsweise vorgesehene Spalt hat vorzugsweise eine Spaltweite größer als 1 mm und insbesondere größer als 5 mm. Die Spaltweite ist insbesondere größer als 1/2000 und vorzugsweise größer als 1/1000 des Außendurchmessers der Seitenwand. In einer konkreten Ausgestaltung bei etwa 7,5 m Durchmesser beträgt die Spaltweite vorzugsweise zwischen 5 mm und 20 mm. Die Spaltweite kann auch von dem zu verarbeitenden Produkt abhängen.

Der Spalt ermöglicht theoretisch den Durchtritt von zu verarbeitendem Produkt nach außen, da das Niveau des zu verarbeitenden Materials im Betrieb sich in vertikaler Richtung bis oberhalb der untersten Oberkante der äußeren Seitenwand erstreckt. Durch den labyrinthartigen Spalt wird bei den typischen zu verarbeitenden Produkten aber ein Austritt von Produkt nach außen zuverlässig verhindert.

Der Spalt hat positive Eigenschaften. Der Spalt ermöglicht größere Toleranzen bei der Fertigung des Pelletiertellers. Außerdem gewährleistet ein Spalt eine freie Verfahrbarkeit der beiden Seitenwandeinrichtungen zueinander. Ein erhöhter Widerstand bei der Höhenverstellung durch aufeinander reibende Seitenwandeinrichtungen und insbesondere eine Blockade durch die Seitenwandeinrichtungen können zuverlässig vermieden werden.

Bei dem erfindungsgemäßen Verfahren zum Pelletieren pelletierbarer Stoffe wird wenigstens ein gegenüber der Horizontale geneigter und drehbar angetriebener Pelletierteller eingesetzt, der einen Boden und eine Seitenwand aufweist. Dabei wird die effektive Höhe der Seitenwand in Abhängigkeit von den Betriebsparametern und/oder den Materialeigenschaften verändert. Die innere Seitenwandeinrichtung wird gegenüber der äußeren Seitenwandeinrichtung höhenverstellt, um die effektive Höhe der Seitenwand einzustellen.

Auch das erfindungsgemäße Verfahren hat viele Vorteile. Ein erheblicher Vorteil ist, dass die Aufnahmekapazität des Pelletiertellers veränderbar und insbesondere im Betrieb veränderbar ist. Die effektive Höhe der Seitenwand des Pelletiertellers bestimmt direkt die aufgenommene Menge des pelletierbaren Stoffes und damit auch die Verweilzeit auf dem Pelletierteller.

Vorzugsweise wird die effektive Höhe der Seitenwand wenigstens auch in Abhängigkeit von der Beschaffenheit der ausgetragenen Pellets eingestellt. Insbesondere wird die effektive Höhe der Seitenwand auch in Abhängigkeit von der Drehgeschwindigkeit und/oder dem Neigungswinkel des Pelletiertellers eingestellt. Bevorzugt ist auch die Einstellung der Parameter in Abhängigkeit von der Beschaffenheit des zu pelletierenden Stoffes.

In allen Ausgestaltungen kann gegebenenfalls auch die Höhe und/oder der Anstellwinkel der Abstreifer zur Führung des Materialbettes einstellbar sein, wobei die Höhe dann insbesondere in Abhängigkeit von den aktuellen Betriebsbedingungen eingestellt wird.

Vorzugsweise wird der Anteil des zugeführten Bindemittels und/oder weiterer Zusatzstoffe in Abhängigkeit von der Beschaffenheit des zu pelletierenden Stoffes und/oder der fertiggestellten Pellets eingestellt.

Weitere Vorteile und Merkmale der vorliegenden Erfindung ergeben sich durch die Ausführungsbeispiele, welche im Folgenden mit Bezug auf die beiliegenden Figuren erläutert werden.

Darin zeigen:
- Fig. 1: eine perspektivische Gesamtansicht einer ersten Pelletiereinrichtung;
- Fig. 2: eine teilgeschnittene Seitenansicht der Pelletiereinrichtung aus Fig. 1;
- Fig. 3: das Detail "B" in einer vergrößerten Darstellung, bei dem sich die Seitenwand in einer ersten Höheneinstellung befindet;
- Fig. 4: das Detail "B" mit der Seitenwand in einer zweiten Höheneinstellung;
- Fig. 5: das Detail "B" mit der Seitenwand in einer dritten Höheneinstellung;
- Fig. 6: die Motoreinrichtung zum Drehen des Pelletiertellers gemäß Fig. 1;
- Fig. 7: einen vergrößerten schematischen Querschnitt durch den Seitenwandaufbau des Pelletiertellers gemäß Fig. 1;
- Fig. 8: ein zweites Ausführungsbeispiel einer Pelletiereinrichtung in einer perspektivischen Ansicht;
- Fig. 9: die Pelletiereinrichtung gemäß Fig. 8 in einer geschnittenen Seitenansicht;
- Fig. 10: ein vergrößertes Detail der Seitenwand der Pelletiereinrichtung gemäß Fig. 8 in einer ersten Höheneinstellung; und
- Fig. 11: ein vergrößertes Detail der Seitenwand der Pelletiereinrichtung gemäß Fig. 8 in einer zweiten Höheneinstellung.

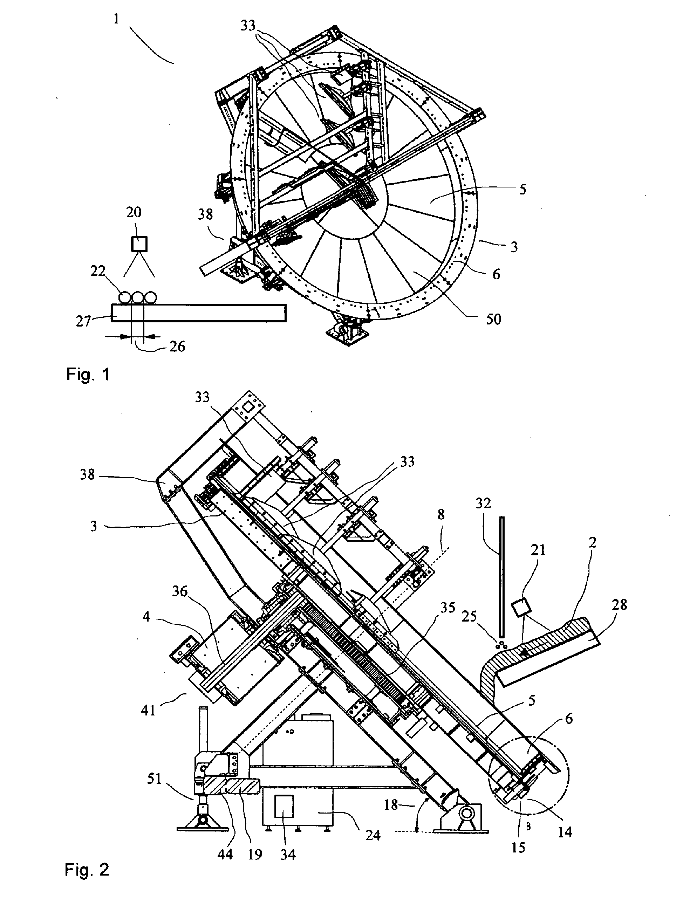

Mit Bezug auf die Figuren 1 - 7 wird zunächst ein erstes Ausführungsbeispiel der vorliegenden Erfindung erläutert. In Figur 1 ist eine in einer perspektivischen Gesamtansicht dargestellte erfindungsgemäße Pelletiereinrichtung 1 abgebildet, die über einen Pelletierteller 3 verfügt. Der Pelletierteller 3 wird über ein Gestell 38 um einen Winkel 18 zur Horizontalen geneigt gehalten. Die Pelletiereinrichtung 1 ist insbesondere für große Massendurchsätze ausgelegt. Vorzugsweise wird ein Massendurchsatz größer 25 Tonnen pro Stunde und insbesondere größer 50 Tonnen pro Stunde erreicht. Besonders bevorzugt weisen solche Anlagen pro Pelletierteller einen Massendurchsatz größer 100 Tonnen pro Stunde auf.

Wie insbesondere Figur 2 entnehmbar ist, ist der Pelletierteller 3 um eine Drehachse 8 drehbar aufgenommen und wird über eine Motoreinrichtung 4 drehbar angetrieben. Die Motoreinrichtung 4 ist ein Torquemotor 41 und hier als Synchronmotor 41 ausgeführt ist. Der Torquemotor 41 verfügt über einen konstant magnetisierten Läufer bzw. Rotor, der synchron von einem bewegten magnetischen Drehfeld im umgebenden Stator mitgenommen wird.

Im gewählten Ausführungsbeispiel weist der Torquemotor 41 Permanentmagnete zur Erzeugung des Magnetfeldes im Läufer auf. Der Torquemotor 41 weist im Betrieb eine Drehzahl auf, die synchron zu der angelegten Wechselspannung ist. Damit wird die Drehzahl des Torquemotors 41, der über eine vorgegebene Polpaarzahl verfügt mit der Frequenz der angelegten Wechselspannung verknüpft und läuft hiermit synchron.

Um die Drehzahl des Torquemotors 41 und damit die Drehzahl des Pelletiertellers 3 einstellen bzw. variieren zu können, ist ein Verstärkermodul 34 vorgesehen, der von der Steuereinrichtung 24 gesteuert eine entsprechende Frequenz der Wechselspannung erzeugt und den Torquemotor 41 damit beaufschlagt. Das Verstärkermodul 34 ermöglicht einen geberlosen Betrieb des Torquemotors 41 und umfasst insbesondere wenigstens einen Servoverstärker oder ist als ein solcher ausgeführt.

Der Einsatz des Torquemotors 41 bietet erhebliche Vorteile, da damit hohe Drehmomente bei niedrigen Drehzahlen mit hohem Wirkungsgrad erzeugbar sind. Möglich ist auch der Einsatz von Torquemotoren in asynchroner Bauweise.

Die Verwendung eines solchen Torquemotors 41 gegenüber den im Stand der Technik typischerweise verwendeten hochtourigen Asynchronmotoren hat auch den Vorteil, dass ein geringerer Wartungsaufwand erforderlich ist. In der Regel wird kein Drehzahlgeber nötig und auf den Einsatz von Kupplungselementen in Form von Gummipuffern oder dergleichen kann verzichtet werden. Auch der Einsatz eines mehrstufigen Getriebes ist nicht nötig. Durch die geringere Zahl der einzelnen Komponenten wird der Wartungsbedarf reduziert und es müssen weniger Ersatzteile vorgehalten werden. Weiterhin wird der Verschleiß an sich reduziert und es kann auf den Einsatz von Getriebeöl im erheblichen Maße verzichtet werden. Die Energieeffizienz ist größer, da kein Energieverlust an den Kupplungen und im aufwendigen Getriebe anfällt. Außerdem ist der Torquemotor 41 unanfälliger gegen Störungen, da weniger mechanische Komponenten verbaut sind.

In einer anderen Ausgestaltung ist es auch möglich, anstelle von Permanentmagneten Elektromagnete zur Erzeugung des Magnetfeldes im Läufer zu verwenden. Dabei kann eine Stromzufuhr über z. B. Schleifringe erfolgen.

Möglich ist auch der Einsatz von dreiphasigen Synchronmotoren, die zur Erfassung der Motorlage über geeignete Sensoren verfügen können. Dabei werden typischerweise zwei Phasen mit Strom versorgt, während die dritte Phase stromlos geschaltet wird. Durch eine entsprechende umlaufende Schaltung der einzelnen Phasen wird ein drehendes Magnetfeld erzeugt, welches den Motor antreibt.

Zur Einsparung von separaten Sensoren und zur Erfassung der Drehrichtung ist es auch möglich, die jeweils stromlose Phase steuerungstechnisch vorzugeben, um die Drehrichtung und Drehzahl des Motors entsprechend zu steuern. Durch ein solches sensorloses Antriebskonzept werden der Wartungsbedarf und die möglichen Fehleranfälligkeiten weiter reduziert.

Möglich ist aber auch der Einsatz von anderen Antriebskonzepten, wie z. B. elektrischen Asynchronmotoren mit Kupplung und Getriebekombination oder sonstigen Antriebseinrichtungen.

Bei der Pelletiereinrichtung 1 weist der mit der Antriebswelle 36 versehene Torquemotor 41 ein Antriebsritzel 40 auf, welches mit einem Zahnkranz 35 des Pelletiertellers 3 kämmt. Da die Zähnezahl des Zahnkranzes 35 erheblich größer ist, als die Zähnezahl des Antriebsritzels 40 dreht sich der Pelletierteller 3 in Betrieb erheblich langsamer als die Welle 36 des Torquemotors 41. Typischerweise werden Rotationsgeschwindigkeiten zwischen etwa 2 und 10 Umdrehungen pro Minute und insbesondere zwischen 4 und 7 Umdrehungen pro Minute bei einem Pelletierteller mit 7,5 m Durchmesser erzielt. Dabei beträgt die Umfangsgeschwindigkeit typischerweise zwischen 1 und 5 m pro Sekunde. Vorzugsweise liegt die Umfangsgeschwindigkeit bei etwa 2 m pro Sekunde.

Betrachtet man den Pelletierteller 3 senkrecht zu seiner Oberfläche und versieht man die Bodenfläche praktisch mit einer Einteilung entsprechend eines Zifferblattes einer Uhr so erfolgt typischerweise die Aufgabe des zu pelletierenden Stoffes 2 in einem Bereich von etwa 4 bis 5 Uhr, wenn die Drehrichtung des Pelletiertellers von oben auf den Prozessraum betrachtet im Uhrzeigersinn erfolgt. Die Abgabe der fertigen Pellets erfolgt meist zwischen etwa 7 und 9 Uhr. Dabei laufen die pelletierbaren Stoffe bis zur Abgabe als fertige Pellets typischerweise mehrmals mit dem Pelletierteller 3 um, sodass die Verweilzeit der zu pelletierenden Stoffe 2 unter anderem von dem Durchmesser des Pelletiertellers 3, der Drehgeschwindigkeit des Pelletiertellers 3 und der Höhe der Seitenwand abhängt.

Der Prozessraum 50 des Pelletiertellers 3 wird hier praktisch durch einen geneigten und rotierenden flachzylindrischen Behälter gebildet. Das aufgegebene Feingut 2 wird durch die Drehung des Pelletiertellers 3 in Abhängigkeit von den Betriebsbedingungen, wie der Drehzahl, dem Anstellwinkel 18 etc. bis weit nach oben und gegebenenfalls bis zur tellerhöchsten Stelle mitgerissen und rollt dann auf dem Materialbett wieder zurück nach unten, wo es dann erneut wieder mitgerissen wird. Zur Verbesserung der Haftbedingungen kann das Material 2 z. B. von oben mit Bindemittel und/oder Wasser besprüht werden. Oftmals ist es bei bekannten Anlagen nötig, den Pelletierteller nach einem unplanmäßigen Stopp wenigstens teilweise vor einem Startvorgang von Hand zu entleeren, da die auftretenden Belastungen für den Antriebsstrang beim Start mit gefülltem Pelletierteller zu groß sind. Nur eine sehr aufwendige und damit teure Überdimensionierung aller Antriebskomponenten könnte Abhilfe schaffen. Hingegen sind Torquemotoren konstruktionsbedingt in der Lage, ein erhebliches Überlastmoment in der Anlaufphase aufzubringen.

Die Welle 8 der Motoreinrichtung 4 ist mit einem Ritzel 40 versehen. Die Welle 8 ist mit dem Zahnkranz 35 des Pelletiertellers gekoppelt. Der Zahnkranz 35 ist fest mit dem Pelletierteller 3 verbunden, sodass keine weitere Getriebestufe zwischen dem Torquemotor 41 und dem Pelletierteller 3 vorgesehen oder nötig ist.

Der Pelletierteller 3 weist in der Regel einen Neigungswinkel 18 zwischen 40 und 70 Grad zur Horizontalen auf. Typischerweise liegt der Winkel in einem Bereich zwischen 50 und 60 Grad und hängt vom konkreten Anwendungsfall und von den Eigenschaften der zu pelletierenden Stoffe ab. In einem konkreten Ausführungsbeispiel kann unter bestimmten Betriebsparametern der Winkel 18 bei 56 bis 57 Grad liegen.

Der Neigungswinkel 18 des Pelletiertellers 3 lässt sich hier stufenlos, automatisch und selbst im laufenden Betrieb über eine motorgetriebene Gewindespindel 51 verstellen.

Die Drehzahl des Pelletiertellers 3 kann ebenfalls stufenlos geregelt werden. Durch ein spezielles Antriebskonzept mit einem oder mehreren Torquemotoren 41 ist es möglich, den Teller auch unter Volllast anzufahren. Das ist ein erheblicher Vorteil gegenüber bekannten Pelletiertellern, die oft nur halb befüllt oder leer gestartet werden können.

Durch die geneigte Stellung des Pelletiertellers 3 bedingt, sammeln sich im unteren Bereich des Pelletiertellers 3 die größeren Pellets. Im oberen Bereich des Pelletiertellers 3 sind Abstreifer 33 vorgesehen, die dafür sorgen, dass dort die Höhe des eingefüllten pelletierbaren Stoffes 2 ein vorbestimmtes und gegebenenfalls variables Maß nicht übersteigt und das Abrollen der Pellets begünstigen.

Eine Fördereinrichtung 28 fördert den pelletierbaren Stoff 2 auf den Pelletierteller 3. Dabei kann eine Sensoreinrichtung 21 wenigstens eine Eigenschaft des zu pelletierenden Stoffes erfassen. Beispielsweise kann der Durchmesser der einzelnen zu pelletierenden Teilchen oder es kann eine Durchmesserverteilung bestimmt werden. Es ist aber auch möglich, den Feuchtigkeitsanteil des zu pelletierenden Stoffes oder weitere Eigenschaften des zu pelletierenden Stoffes zu bestimmen.

In Abhängigkeit von den Eigenschaften des zu pelletierenden Stoffes und auch in Abhängigkeit von der Größenverteilung der produzierten Pellets und/oder von weiteren Eigenschaften der fertigen Pellets kann ein Zusatzstoff 25 oder es können mehrere Zusatzstoffe 25 über eine Zusatzstoffzufuhr 32 dem Pelletierteller 3 oder der Fördereinrichtung 28 zugeführt werden, um die Bildung der Pellets 22 zu fördern oder um geeignete Eigenschaften der fertigen Pellets 22 zu erzeugen.

Die fertigen Pellets 22 verlassen den Pelletierteller 3 über den oberen Rand der Seitenwand 6 und werden über eine nur schematisch eingezeichnete Transporteinrichtung 27 abtransportiert. Dabei kann eine Sensoreinrichtung 20 vorgesehen sein, die beispielsweise über optische Verfahren einzelne Durchmesser 26 der erzeugten Pellets oder die Durchmesserverteilung der Pellets und/oder einem und/oder mehrere andere Parameter erfasst.

Insbesondere werden die erzeugten Pellets 22 mittels geeigneter Siebe klassiert, um nur die gewünschte Kornfraktion als Fertigpellets abzuführen. Die abgeführte Wertkornfraktion weist im konkreten Ausführungsbeispiel bei der Pelletierung von Eisenerzkonzentrat Durchmesser im Bereich zwischen 9 und etwa 12,5 mm auf. Bei einem Durchmesser des Pelletiertellers von 7,5 m wird ein Durchsatz von etwa 100 bis 150 Tonnen pro Stunde Eisenerz erzielt.

Durch den Segregations- bzw. Entmischungseffekt auf dem Pelletierteller 3, der bewirkt, dass größere Partikel eher nach oben wandern,liegt ein Anteil der den Pelletierteller verlassenden Pellets von 70 %, 75% oder mehr im Wertkornbereich.

Das aufgegebene Material weist hier bei der Pelletierung von Eisenerzkonzentrat (Pellet Feed Fines: PFF) typische Durchmesser kleiner 100 Mikrometer auf.

Die Pelletiereinrichtung 1 verfügt über eine Seitenwand 6, deren effektive Höhe 7 veränderbar und hier auch während des Betriebs einstellbar ist. Durch eine größere effektive Höhe 7 der Seitenwand 6 wird eine längere Aufenthaltszeit des zu pelletierenden Stoffes 2 auf dem Pelletierteller 3 gewährleistet, wodurch eine Anpassung an die aktuell vorliegenden Bedingungen möglich ist. Dadurch kann sehr flexibel und während des Betriebs bei sich ändernden Parametern eine kurzfristige Anpassung der Betriebsparameter der Pelletiereinrichtung 1 erfolgen. Somit können negative Auswirkungen geänderter Bedingungen in Bezug auf die Wertkornfraktion ausgeglichen werden.

Da die typische Aufenthaltszeit der zu pelletierenden Stoffe 2 auf dem Pelletierteller 3 im Bereich von einigen Minuten liegt, kann so sehr schnell auf sich ändernde Bedingungen reagiert werden. Wird hingegen in einem vorgeschalteten Prozess die Feuchtigkeit erhöht, ist die Reaktionszeit, bis sich das Ergebnis der fertigen Pellets ändert, länger und kann typischerweise im Bereich von bis zu einigen Stunden liegen.

Insgesamt ermöglicht die Pelletiereinrichtung 1 eine erhebliche Verbesserung der Konditionierung der Pellets. Durch die Veränderung der effektiven Höhe 7 der Seitenwand 6 kann neben Veränderungen bei der Zugabe von Bindemitteln und der Einstellung der Rotationsgeschwindigkeit, die entstehende Korngröße flexibel beeinflusst werden. Durch eine Vergrößerung der effektiven Höhe 7 der Seitenwand 6 wird die Aufenthaltszeit erhöht, sodass eine deutliche Erhöhung der Wertkornausbringung bei gleich bleibender Rotationsgeschwindigkeit möglich ist, wenn die Pellets zuvor zu klein waren. Entsprechendes gilt analog bei umgekehrten Verhältnissen.

Insgesamt wird dadurch eine erhebliche Erhöhung der Effektivität und des Durchsatzes der Anlage erzielt. Außerdem führt eine variable Höhe 7 der Seitenwand 6 dazu, dass bei unterschiedlichen Stoffen oder Produktanforderungen (z. B. Größe, Dicke), die mit der gleichen Anlage zu pelletieren sind, jeweils in einem weiten Bereich verschiedene Parameter einstellbar sind.

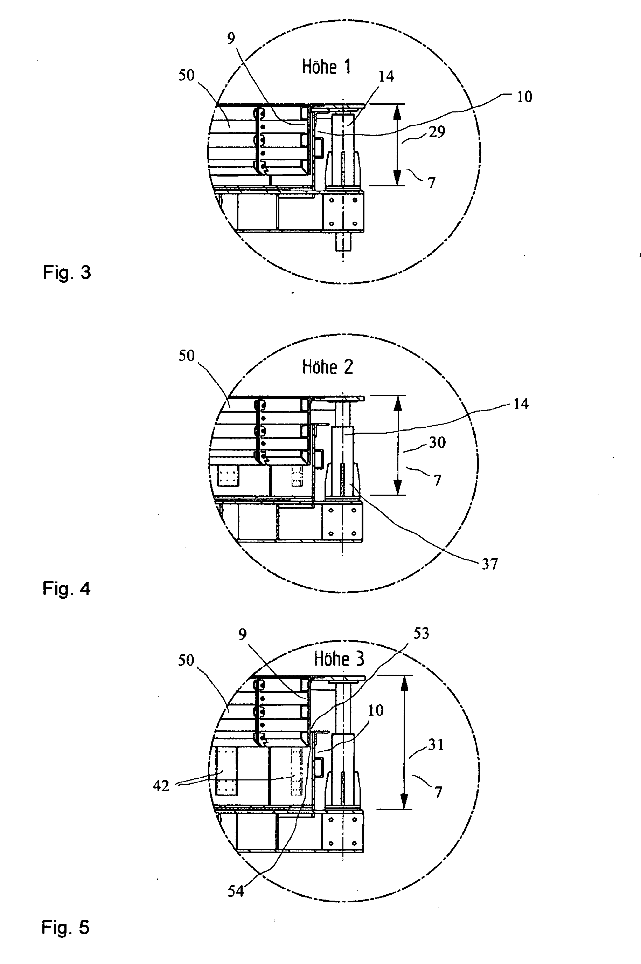

In den Figuren 3-5 sind unterschiedliche Einstellungen der effektiven Höhe 7 der Seitenwand 6 dargestellt. Die innere Seitenwandeinrichtung 6 ist höhenverstellbar ausgeführt, während die äußere Seitenwandeinrichtung 10 feststehend ausgeführt ist. Die Verstellung der Höhe der Seitenwand 6 erfolgt hier über eine Verstelleinrichtung 14, die hier als Hydraulikeinrichtung 15 ausgeführt ist und die über mehrere Hydraulikzylinder 37 verfügt, die durch die Steuerungseinrichtung 24 gesteuert, die innere Seitenwandeinrichtung 9 automatisch anheben oder senken, je nachdem wie es gerade gewünscht ist. Erstaunlicherweise hat sich gezeigt, dass die innere verstellbare Seitenwandeinrichtung 6 einen dauerhaft zuverlässigen Betrieb ermöglicht. Ein Verklemmen der verfahrbaren Seitenwandeinrichtung 6 tritt im Betrieb nicht auf, obwohl die Seitenwandeinrichtung 6 beim Verringern der effektiven Höhe in das auf dem Pellettierteller vorhandene Material eintaucht bzw. von der äußeren Seitenwandeinrichtung wegschiebt.

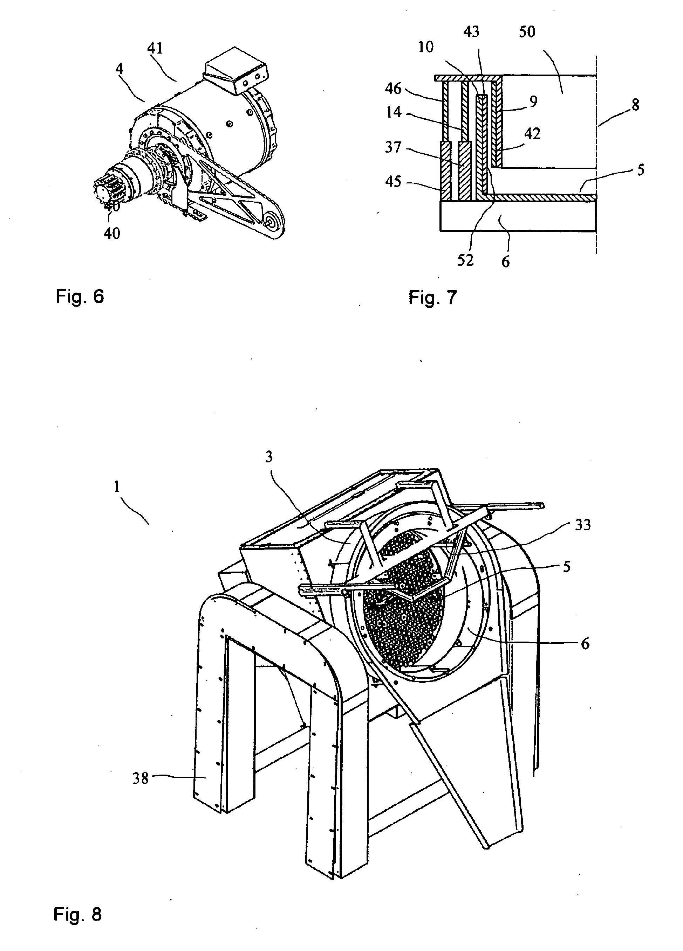

In der in Figur 3 dargestellten Stellung entspricht die effektive Höhe 7 der geringsten Höhe 29. In Figur 4 ist die Seitenwand in einer mittleren Höhe 30 dargestellt, während in Figur 6 die größtmögliche Höhe 31 abgebildet ist. Hier kann die Seitenwand in einem Höhenbereich von etwa 50 cm bis 90 cm eingestellt werden. Auch noch größere Höhen sind konstruktiv möglich.

In Figur 6 ist die als Torquemotor 41 ausgeführte Motoreinrichtung 4 separat abgebildet. Klar erkennbar ist das Antriebsritzel 40 an dem Torquemotor 41. Das Verstärkermodul 34, der die Ansteuerung der einzelnen Phasen bewirkt, ist in Fig. 2 abgebildet.

In Fig. 7 ist ein vergrößerter schematischer Querschnitt durch den Seitenwandaufbau des Pelletiertellers 3 gemäß Fig. 1 dargestellt. Die Fig. 7 ist nicht maßstäblich gezeichnet, um den Überblick zu erleichtern und die Funktion zu verdeutlichen.

In diesem Ausführungsbeispiel weist die Stützstruktur an der Seitenwand 6 mehrere am Umfang verteilte Gleitführungen auf, die jeweils aus einem Führungsrohr 45 bestehen im dem zwei oder mehr Gleitbuchsen eingesetzt sind. Innerhalb der Gleitbuchsen läuft eine Führungsstange 46, die entsprechend der gewünschten Höheneinstellung verfahren wird.

Zwischen der inneren Seitenwandeinrichtung 9 und der äußeren Seitenwandeinrichtung 10 sind an der inneren Seitenwandeinrichtung 9 als Bronze-Gleitbleche ausgeführte Gleitplatten 42 befestigt, die unter anderem zur Lagestabilisierung dienen. Die Bronze-Gleitbleche gleiten hier auf Gegenplatten 43 aus einem verschleißfesten Blech, das beispielsweise aus einem Hartmetall wie z. B. Hardox bestehen kann, die insbesondere am Außenring 10 befestigt sind.

Ein umgekehrter Aufbau mit einer außenliegenden verstellbaren Seitenwandeinrichtung hat hingegen nicht zum Erfolg geführt, da das Material zwischen die beiden Seitenwandeinrichtungen gezogen wird. Bei einem solchen Aufbau trat ein Verklemmen der Seitenwand auf, sodass ein kontinuierlicher Betrieb mit automatischer Seitenwandverstellung nicht gewährleistet werden konnte. Ein damit ausgeführter Pelletierteller ist in der Regel darüber hinaus auch undicht. Der Aufbau mit einer innenliegenden verstellbaren Seitenwandeinrichtung ermöglicht hingegen eine Verstellung der effektiven Höhe 7 der Seitenwand im Betrieb, während weiterhin pelletiert wird. So kann - ohne Stopp des Systems - kontinuierlich pelletiert werden und es kann kurzfristig auf sich ändernde Bedingungen reagiert werden. Der Betrieb ist vollautomatisch sensorgesteuert möglich. Möglich ist aber auch ein von Hand initiiertes Verfahren der inneren Seitenwandeinrichtung 9, um bei Bedarf die effektive Höhe 7 zu verändern.

Der Pelletierteller 3 ist im Wesentlichen dicht ausgeführt, obwohl ein radialer Spalt 52 zwischen der inneren Seitenwandeinrichtung 9 und der äußeren Seitenwandeinrichtung 10 vorhanden ist, dessen Spaltweite 54 hier etwa 15 mm beträgt, aber auch größer oder kleiner sein kann. In diesem Ausführungsbeispiel sind auch Spaltweiten 54 von 5 mm oder von 20 mm denkbar. Durch den labyrinthartigen Aufbau der Seitenwand wird zuverlässig der Austritt größerer Mengen zu pelletierenden Materials verhindert, während gleichzeitig ein einfaches Verstellen der effektiven Höhe 7 der Seitenwand 6 gewährleistet wird. Insbesondere eine Spaltweite, die größer ist als der angestrebte Pelletdurchmesser verhindert darüber hinaus ein Zusetzen des Spaltes im Betrieb. Partikel, die in den Spalt hinein gelangen, fallen während des Umlaufes wieder zurück in den Pelletierteller, wenn dieser Bereich des Spaltes während des Umlaufes oberhalb des Produktspiegels gelangt.

Typischerweise wird eine solche Pelletiereinrichtung 1 zur Pelletierung von Eisenerzen oder dergleichen neun Monate durchgängig betrieben, bevor die Pelletiereinrichtung 1 gewartet wird. Eine solche intensive Wartung kann einige Wochen benötigen. Im Anschluss daran muss der Pelletierteller 3 aber wieder für einen langen Zeitraum ohne Zwischenstopp durchlaufen. Bei einem Zwischenstopp kann ein manuelles Entleeren mit Schaufeln nötig werden, falls ein konventioneller Asynchronmotor verwendet wird. Bei geplanten Stopps muss ein konventioneller Pelletierteller zuvor leer gefahren werden. Denn die dort verwendeten schnell laufenden Asynchronmotoren können bei großen Anlagen nicht das nötige Antriebsmoment bei geringen Drehzahlen aufbringen. Nur eine sehr erhebliche und damit sehr teure Überdimensionierung des konventionellen Asynchronmotors könnte ein Wiederanlaufen im gefüllten Zustand ermöglichen. Der hier eingesetzte Torquemotor erlaubt auch das Starten im gefüllten Zustand, da dieser Motor schon aus dem Stand ein sehr hohes Drehmoment aufbringen kann. In einem konkreten Beispiel zur Pelletierung von Eisenerz hat der Motor bei einem Durchmesser des Pelletiertellers von etwa 7,5 m ein Nenndrehmoment von mehr als 40 kNm und ein kurzzeitiges maximales Drehmoment von mehr als 60 kNm, welches z. B. beim Anfahren aufgebracht werden kann.

Mit Bezug auf die Figuren 8 bis 11 ist ein weiteres Ausführungsbeispiel einer erfindungsgemäßen Pelletiereinrichtung 1 dargestellt. Im Unterschied zum vorhergehenden Ausführungsbeispiel, bei dem der Pelletierteller 3 einen Durchmesser von etwa 7,5 m aufweist, hat der Pelletierteller 3 im Ausführungsbeispiel gemäß Figur 7 einen Durchmesser von etwa 1 m. Der Pelletierteller 3 verfügt über einen Boden 5 und über eine Seitenwand 6, die wiederum über eine innenliegende Seitenwandeinrichtung 9 höhenverstellbar ausgeführt ist, während die äußere Seitenwandeinrichtung 10 feststehend ausgebildet ist.

Hier im Ausführungsbeispiel ist an der Verstelleinrichtung 14 ein Spindelantrieb 17 vorgesehen, der über Schubstangen 11 mit der inneren Seitenwandeinrichtung 9 verbunden ist.

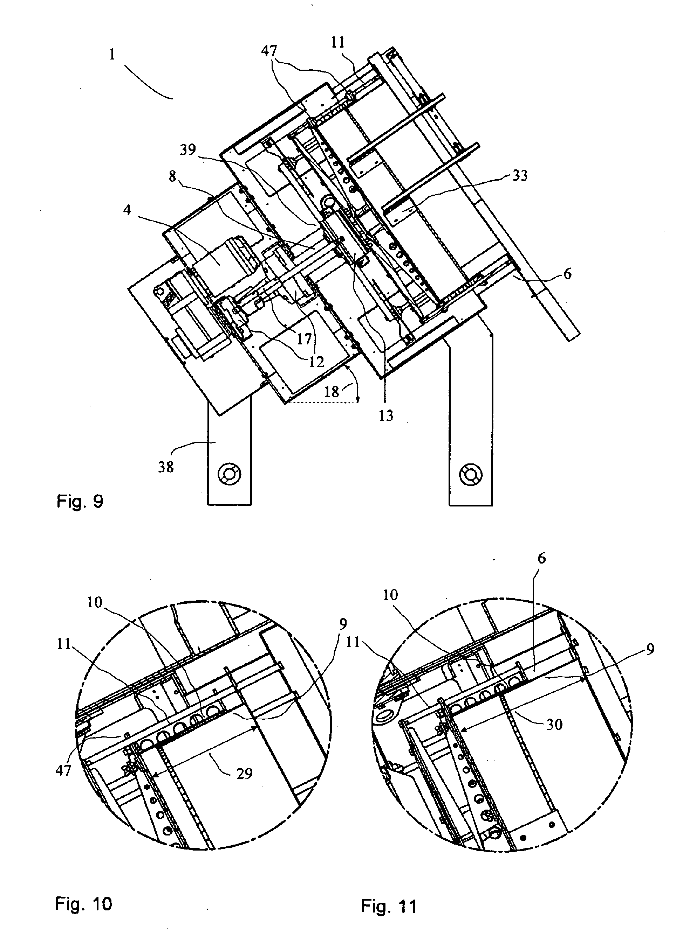

Wie in den Figuren 10 und 11 dargestellt, kann die effektive Höhe 7 der Seitenwand beispielsweise zwischen einer Höhe 29 und einer Höhe 30 variiert werden, um den jeweils aktuellen Anforderungen zu genügen.

Während der Torquemotor 41 aus dem Ausführungsbeispiel gemäß der Figuren 1-7 eine Leistung von bis zu 260 kW aufweist, kann der Antriebsmotor gemäß dem Ausführungsbeispiel der Figuren 8-11 erheblich kleiner ausfallen. Typischerweise steigt die Drehzahl des Pelettiertellers mit geringer werdendem Außendurchmesser und variiert darüberhinaus in allen Fällen noch mit dem zu pelletierenden Stoff. Das Drehzahlverhältnis muss nicht linear mit dem Durchmesserverhältnis übereinstimmen.

In diesem Ausführungsbeispiel kann die Stützstruktur an der Seitenwand Gleitführungen 47 aufweisen, die aus einer Führung bestehen in dem zwei oder mehr Gleitbuchsen eingesetzt sind.

Neben dem Einsatz zur Herstellung von Eisenerzpellets und der weiteren eingangs genannten Stoffe ist der Einsatz solcher Pelletiereinrichtungen 1 auch bei der Herstellung von Waschmitteln und Futtermitteln, sowie der Verarbeitung von Reststoffen, Abfallstoffen, Filterstäuben, organischen Substanzen oder Schlacken aus z. B. Kraftwerken möglich. Durch die vorliegende Ausgestaltung der Erfindung wird der Energiebedarf verringert und es wird der Anteil der hochwertigen Pellets deutlich erhöht. Der Fehlkornanteil wird vermindert und die Produktivität erhöht. Die gewünschten Pelleteigenschaften können besser eingestellt werden.

Durch die Höhenverstellung der Seitenwand 6 kann der Prozessraum im Inneren des Pelletiertellers 3 deutlich vergrößert und an die aktuellen Bedingungen angepasst werden. Ein automatischer und dauerhaft zuverlässiger Betrieb ist möglich.

**Bezugszeichenliste:**

| | | | |
|---|---|---|---|
| 1 | Pelletiereinrichtung | 27 | Transporteinrichtung |
| 2 | pelletierbarer Stoff | 28 | Fördereinrichtung |
| 3 | Pelletierteller | 29 | Höhe |
| 4 | Motoreinrichtung | 30 | Höhe |
| 5 | Boden | 31 | Höhe |
| 6 | Seitenwand | 32 | Zusatzstoffzufuhr |
| 7 | effektive Höhe | 33 | Abstreifer |
| 8 | Drehachse | 34 | Verstärkermodul |
| 9 | innere Seitenwandeinrichtung | 35 | Zahnkranz |
| | | 36 | Welle |
| 10 | äußere Seitenwandeinrichtung | 37 | Hydraulikzylinder |
| | | 38 | Gestell |
| 11 | Schubstange | 39 | Gleitlagerbuchse |
| 12 | Lager | 40 | Ritzel |
| 13 | Linearlager | 41 | Torquemotor |
| 14 | Verstelleinrichtung | 42 | Gleitplatte |
| 15 | Hydraulikeinrichtung | 43 | Gegenplatte |
| 17 | Spindelantrieb | 44 | Getriebe |
| 18 | Neigungswinkel | 45 | Führungsrohr |
| 19 | Antriebseinrichtung | 46 | Führungsstange |
| 20 | Sensoreinrichtung | 47 | Gleitführung |
| 21 | Sensoreinrichtung | 50 | Prozessraum |
| 22 | Pellet | 51 | Gewindespindel |
| 24 | Steuereinrichtung | 52 | Spalt |
| 25 | Zusatzstoff | 54 | Spaltweite |
| 26 | Durchmesser | | |

## Patentansprüche

1. Pelletiereinrichtung (1) zum Pelletieren pelletierbarer Stoffe (2) mit wenigstens einem gegenüber der Horizontalen geneigten und drehbar vorgesehenen Pelletierteller (3), wobei der Pelletierteller (3) über eine Motoreinrichtung (4) antreibbar ist, und wobei der Pelletierteller (3) wenigstens einen Boden (5) und wenigstens eine Seitenwand (6) aufweist, wobei der Boden (5) und die Seitenwand (6) einen Prozessraum (50) aufspannen, dessen Größe veränderbar ist, indem eine effektive Höhe (7) der Seitenwand (6) veränderbar ist,
**dadurch gekennzeichnet,**
**dass** die Seitenwand eine innere Seitenwandeinrichtung (9) und eine äußere Seitenwandeinrichtung (10) umfasst, wobei die innere Seitenwandeinrichtung (9) gegenüber der äußeren Seitenwandeinrichtung (10) höhenverstellbar angeordnet ist.

2. Pelletiereinrichtung (1) nach Anspruch 1 , wobei wenigstens eine Verstelleinrichtung (14) zur Verstellung der effektiven Höhe (7) der Seitenwand (6) vorgesehen ist.

3. Pelletiereinrichtung (1) nach Anspruch 1 oder 2, wobei wenigstens ein steuerbarer Antrieb zur Verstellung der effektiven Höhe (7) der Seitenwand (6) vorgesehen ist.

4. Pelletiereinrichtung (1) nach mindestens einem der vorhergehenden Ansprüche, wobei eine automatische Verstellung der effektiven Höhe (7) der Seitenwand (6) auch während des Betriebes vorgesehen ist.

5. Pelletiereinrichtung (1) nach mindestens einem der vorhergehenden Ansprüche, wobei wenigstens eine Sensoreinrichtung (20, 21) vorgesehen ist.

6. Pelletiereinrichtung (1) nach mindestens einem der vorhergehenden Ansprüche, wobei wenigstens eine Steuereinrichtung (24) vorgesehen ist.

7. Pelletiereinrichtung (1) nach mindestens einem der vorhergehenden Ansprüche, wobei mit der Steuereinrichtung (24) anhand der Sensordaten der Sensoreinrichtung (20, 21) die effektive Höhe (7) der Seitenwand (6) automatisch einstellbar ist.

8. Pelletiereinrichtung (1) nach mindestens einem der vorhergehenden Ansprüche, wobei wenigstens die innere Seitenwandeinrichtung (9, 10) über mehrere Schubstangen (11) höhenverstellbar vorgesehen ist.

9. Pelletiereinrichtung (1) nach mindestens einem der vorhergehenden Ansprüche, wobei die effektive Höhe (7) der Seitenwand (6) wenigstens teilweise über wenigstens eine Hydraulikzylindereinrichtung und/oder wenigstens einen Spindelantrieb und/oder wenigstens eine Zahnstange einstellbar ist.

10. Pelletiereinrichtung (1) nach mindestens einem der vorhergehenden Ansprüche, wobei der Neigungswinkel (18) des Pelletiertellers (3) einstellbar ist, wobei insbesondere wenigstens eine Antriebseinrichtung (19) zur Einstellung des Neigungswinkels (18) des Pelletiertellers (3) vorgesehen ist.

11. Pelletiereinrichtung (1) nach mindestens einem der vorhergehenden Ansprüche, wobei wenigstens eine Sensoreinrichtung (20, 21) zur Erfassung der Größe der pelletierten Pellets (22) und/oder wenigstens eines Parameters (23) des zu pelletierenden Stoffes (2) vorgesehen ist.

12. Pelletiereinrichtung (1) nach mindestens einem der vorhergehenden Ansprüche, wobei die Steuereinrichtung (24) auch zur Steuerung der Drehzahl des Pelletiertellers (3) und/oder des Neigungswinkels (18) des Pelletiertellers (3) vorgesehen ist.

13. Pelletiereinrichtung (1) nach mindestens einem der vorhergehenden Ansprüche, wobei wenigstens abschnittsweise ein freier Spalt zwischen der äußeren Seitenwandeinrichtung (10) und der inneren Seitenwandeinrichtung (9) vorgesehen ist.

14. Verfahren zum Pelletieren pelletierbarer Stoffe (2) mit wenigstens einem gegenüber der Horizontalen geneigten und drehbar angetriebenen Pelletierteller (3) mit einem Boden (5) und einer Seitenwand (6), wobei eine Größe des Prozessraumes (50) über eine effektive Höhe (7) der Seitenwand (6) in Abhängigkeit von Betriebsparametern verändert wird, wobei die innere Seitenwandeinrichtung gegenüber der äußeren Seitenwandeinrichtung höhenverstellt wird, um die effektive Höhe der Seitenwand einzustellen.

15. Verfahren nach dem vorhergehenden Anspruch, wobei die effektive Höhe (7) der Seitenwand (6) in Abhängigkeit von der Beschaffenheit der ausgetragenen Pellets (22) und/oder der Art und der Beschaffenheit des Aufgabematerials eingestellt wird und/oder wobei eine Drehgeschwindigkeit und/oder ein Neigungswinkel (18) des Pelletiertellers (3) in Abhängigkeit von der Beschaffenheit der ausgetragenen Pellets (22) und/oder der Art und der Beschaffenheit des Aufgabematerials eingestellt wird.

## Claims

1. Pelletizing device (1) for pelletizing pelletizing materials (2) having at least one pelletizing disk (3) inclined to the horizontal and provided rotatable, the pelletizing disk (3) being drivable via a motor device (4), and wherein the pelletizing disk (3) comprises at least one bottom (5) and at least one side wall (6), the bottom (5) and the side wall (6) opening up a processing space (50) whose size is variable in that an effective height (7) of the side wall (6) is variable, **characterized in that** the side wall comprises an inner side wall device (9) and an outer side wall device (10) wherein the inner side wall device (9) is disposed height-adjustable relative to the outer side wall device (10).

2. The pelletizing device (1) according to claim 1 wherein at least one adjustment device (14) is provided for adjusting the effective height (7) of the side wall (6).

3. The pelletizing device (1) according to claim 1 or 2,
wherein at least one controllable drive is provided for adjusting the effective height (7) of the side wall (6).

4. The pelletizing device (1) according to at least one of the preceding claims wherein automatic adjustment of the effective height (7) of the side wall (6) is provided including during operation.

5. The pelletizing device (1) according to at least one of the preceding claims wherein at least one sensor device (20, 21) is provided.

6. The pelletizing device (1) according to at least one of the preceding claims wherein at least one control device (24) is provided.

7. The pelletizing device (1) according to at least one of the preceding claims wherein the effective height (7) of the side wall (6) is automatically adjustable by means of the control device (24) by way of the sensor data of the sensor device (20, 21).

8. The pelletizing device (1) according to at least one of the preceding claims wherein at least the inner side wall device (9, 10) is provided height-adjustable via several push rods (11).

9. The pelletizing device (1) according to at least one of the preceding claims wherein the effective height (7) of the side wall (6) is adjustable at least in part via at least one hydraulic cylinder device and/or at least one spindle drive and/or at least one gear rack.

10. The pelletizing device (1) according to at least one of the preceding claims wherein the inclination angle (18) of the pelletizing disk (3) is adjustable wherein in particular at least one driving device (19) for adjusting the inclination angle (18) of the pelletizing disk (3) is provided.

11. The pelletizing device (1) according to at least one of the preceding claims wherein at least one sensor device (20, 21) is provided for capturing the size of the pelletized pellets (22) and/or of at least one parameter (23) of the pelletizing material (2).

12. The pelletizing device (1) according to at least one of the preceding claims wherein the control device (24) is also provided for controlling the speed of rotation of the pelletizing disk (3) and/or the inclination angle (18) of the pelletizing disk (3).

13. The pelletizing device (1) according to at least one of the preceding claims wherein a free gap is provided at least in sections between the outer side wall device (10) and the inner side wall device (9).

14. Method for pelletizing pelletizing materials (2) comprising at least one pelletizing disk (3) inclined to the horizontal and rotatably driven, with a bottom (5) and a side wall (6), wherein a size of the processing space (50) is changed by way of an effective height (7) of the side wall (6) in dependence on operating parameters wherein the inner side wall device is height-adjusted relative to the outer side wall device for adjusting the effective height of the side wall.

15. The method according to the preceding claim wherein the effective height (7) of the side wall (6) is adjusted in dependence on the quality of the discharged pellets (22) and/or the type and quality of the deposited materials and/or wherein a rotational speed and/or an inclination angle (18) of the pelletizing disk (3) is adjusted in dependence on the quality of the discharged pellets (22) and/or the type and quality of the deposited materials.

## Revendications

1. Dispositif de pellétisation (1) pour pellétiser des substances (2) transformables en pellets, comprenant au moins un plateau de pellétisation (3) prévu pour être rotatif et incliné par rapport à l'horizontale, dans lequel le plateau de pellétisation (3) peut être entraîné par un dispositif moteur (4), et dans lequel le plateau de pellétisation (3) présente au moins un fond (5) et au moins une paroi latérale (6), dans lequel le fond (5) et la paroi latérale (6) définissent un espace de travail (50), dont la taille est modifiable du fait qu'une hauteur effective (7) de la paroi latérale (6) est modifiable,
**caractérisé en ce que** la paroi latérale comprend un dispositif de paroi latérale intérieur (9) et un dispositif de paroi latérale extérieur (10), le dispositif de paroi latérale intérieur (9) étant agencé réglable en hauteur par rapport au dispositif de paroi latérale extérieur (10).

2. Dispositif de pellétisation (1) selon la revendication 1, dans lequel au moins un dispositif de réglage (14) est prévu pour régler la hauteur effective (7) de la paroi latérale (6).

3. Dispositif de pellétisation (1) selon la revendication 1 ou 2, dans lequel au moins un entraînement pilotable est prévu pour régler la hauteur effective (7) de la paroi latérale (6).

4. Dispositif de pellétisation (1) selon l'une au moins des revendications précédentes, dans lequel il est prévu un réglage automatique de la hauteur effective (7) de la paroi latérale (6) même pendant le fonctionnement.

5. Dispositif de pellétisation (1) selon l'une au moins des revendications précédentes, dans lequel au moins un dispositif de détection (20, 21) est prévu.

6. Dispositif de pellétisation (1) selon l'une au moins des revendications précédentes, dans lequel au moins un dispositif de commande (24) est prévu.

7. Dispositif de pellétisation (1) selon l'une au moins des revendications précédentes, dans lequel la hauteur effective (7) de la paroi latérale (6) est ajustable automatiquement avec le dispositif de commande (24) sur la base des données de détection du dispositif de détection (20, 21).

8. Dispositif de pellétisation (1) selon l'une au moins des revendications précédentes, dans lequel au moins le dispositif de paroi latérale intérieur (9, 10) est prévu réglable en hauteur par l'intermédiaire de plusieurs tiges de poussée (11).

9. Dispositif de pellétisation (1) selon l'une au moins des revendications précédentes, dans lequel la hauteur effective (7) de la paroi latérale (6) est ajustable au moins partiellement par au moins un dispositif de cylindre hydraulique et/ou au moins un dispositif d'entraînement à vis et/ou au moins une crémaillère.

10. Dispositif de pellétisation (1) selon l'une au moins des revendications précédentes, dans lequel l'angle d'inclinaison (18) du plateau de pellétisation (3) est ajustable, en particulier au moins un dispositif d'entraînement (19) est prévu pour ajuster l'angle d'inclinaison (18) du plateau de pellétisation (3).

11. Dispositif de pellétisation (1) selon l'une au moins des revendications précédentes, dans lequel au moins un dispositif de détection (20, 21) est prévu pour détecter la taille des pellets (22) et/ou au moins un paramètre (23) de la substance à pellétiser.

12. Dispositif de pellétisation (1) selon l'une au moins des revendications précédentes, dans lequel le dispositif de commande (24) est également prévu pour commander la vitesse de rotation du plateau de pellétisation (3) et/ou l'angle d'inclinaison (18) du plateau de pellétisation (3).

13. Dispositif de pellétisation (1) selon l'une au moins des revendications précédentes, dans lequel au moins par section un espace libre est prévu entre le dispositif de paroi latérale extérieur (10) et le dispositif de paroi latérale intérieur (9).

14. Procédé de pellétisation de substances (2) pouvant être transformées en pellets comprenant au moins un plateau de pellétisation (3) présentant un fond (5) et une paroi latérale (6), entraîné en rotation et incliné par rapport à l'horizontale, dans lequel une taille de l'espace de travail (50) est modifiée par la hauteur effective (7) de la paroi latérale (6) en fonction de paramètres de fonctionnement, le dispositif de paroi latérale intérieur étant réglé en hauteur par rapport au dispositif de paroi latérale extérieur, pour ajuster la hauteur effective de la paroi latérale.

15. Procédé selon la revendication précédente, dans lequel la hauteur effective (7) de la paroi latérale (6) est ajustée en fonction de la nature des pellets déchargés et/ou le type et la nature de la matière d'alimentation et/ou dans lequel une vitesse de rotation et/ou un angle d'inclinaison (18) du plateau de pellétisation (3) est ajusté en fonction de la nature des pellets déchargés et/ou du type et la nature de la matière d'alimentation.
